# EUROPÄISCHE PATENTSCHRIFT

(11) **EP 2 718 133 B1**
(45) Veröffentlichungstag und Bekanntmachung des Hinweises auf die Patenterteilung: **27.05.2015**
(21) Anmeldenummer: 12718572.6
(22) Anmeldetag: 16.03.2012
(51) Int. Cl.: B60K 15/05

(54) **VERRIEGELUNGSEINRICHTUNG FÜR EIN KRAFTFAHRZEUG UND MONTAGE**
LOCKING DEVICE FOR A MOTOR VEHICLE AND ASSEMBLY
DISPOSITIF DE VERROUILLAGE POUR UN VÉHICULE À MOTEUR ET MONTAGE

(30) Priorität: 31.05.2011 DE 102011076810
(43) Veröffentlichungstag der Anmeldung: 16.04.2014
(73) Patentinhaber: Kiekert Aktiengesellschaft, 42579 Heiligenhaus (DE)
(72) Erfinder: KUNST, Frank, 59348 Lüdinghausen (DE); BASAVARAJAPPA, Madhu, S., 40470 Düsseldorf (DE)
(74) Vertreter: Struck, Norbert
(86) Internationale Anmeldenummer: PCT/DE2012/000287
(87) Internationale Veröffentlichungsnummer: WO 2012/163316

(56) Entgegenhaltungen:
- WO-A2-2006/055618
- DE-A1-102008 024 584
- DE-A1-102008 057 860
- US-A- 5 611 580

## Beschreibung

Die Erfindung betrifft eine Verriegelungseinrichtung für ein Verriegeln einer Klappe mit den Merkmalen des Oberbegriffs des Anspruchs 1. Die Verriegelungseinrichtung umfasst ein Stellglied und einen durch das Stellglied bewegbaren Bolzen. Mit der Verriegelungseinrichtung wird insbesondere eine Klappe eines Kraftfahrzeugs verriegelt. Die Erfindung betrifft ferner ein Verfahren für eine Montage der Verriegelungseinrichtung.

Ein Stellglied im Sinne der vorliegenden Erfindung umfasst einen Riegel, der mithilfe eines Antriebs und zwar insbesondere eines elektrischen Antriebs zwischen zwei verschiedenen Stellungen hin und her bewegt werden kann. Der Riegel kann beispielsweise entlang seiner Längsachse bewegt werden und zwar einerseits in Richtung des Gehäuses des Stellglieds und andererseits aus dem Gehäuse des Stellglieds heraus. Ein Elektromotor kann als Antrieb für ein Bewegen des Riegels vorgesehen sein. Es kann sich um einen anders gestalteten elektromagnetischen Antrieb handeln. Der Antrieb kann aber auch auf einer Formgedächtnislegierung basieren.

Bei einem Kraftfahrzeug ist es von besonderer Wichtigkeit, dass die eingesetzten Bauteile oder Baugruppen kompakt sind, zumal die Anzahl von Komponenten in einem Kraftfahrzeug immer weiter ansteigt.

Die Druckschrift EP 1 935 702 B1 offenbart ein Tankklappenmodul für ein Kraftfahrzeug. Dieses umfasst einen Muldenkörper und eine daran mittels eines Scharnierarms angebrachte Klappe. Ein Verriegelungselement, mit dem die Klappe verriegelt werden kann, umgreift den Muldenkörper und reicht bis zu einem Stellmotor, also einem Stellglied, das im Bereich der verschwenkbaren Anbringung der Klappe angeordnet ist. Mithilfe des Stellglieds kann die Klappe verriegelt oder entriegelt werden.

Die Druckschrift DE 10 2008 057 860 A1 offenbart ein Tankklappenmodul für ein Kraftfahrzeug. Das Tankklappenmodul umfasst einen Muldenkörper und eine Tankklappe, die mithilfe eines Scharniers verschwenkbar am Muldenkörper befestigt ist. Ein Aktuator genanntes Stellglied, mit dem ein Verriegelungselement für ein Verriegeln der Klappe betätigt werden kann, ist an dem Muldenkörper angeordnet.

Es ist Aufgabe der Erfindung, eine weiter entwickelte Verriegelungseinrichtung für ein Kraftfahrzeug bereitzustellen.

Zur Lösung der Aufgabe umfasst eine Verriegelungseinrichtung insbesondere die Merkmale des ersten Anspruchs. Vorteilhafte Ausgestaltungen ergeben sich aus den Unteransprüchen. Ein bevorzugtes Verfahren für die Montage der Verriegelungseinrichtung umfasst die Merkmale eines Nebenanspruchs.

Die Aufgabe wird durch eine Verriegelungseinrichtung für eine Klappe gelöst, wobei die Klappe an einem Körper mit einer Mulde verschwenkbar mittelbar oder unmittelbar befestigt ist. Die Verriegelungseinrichtung umfasst ein Stellglied, welches vorzugsweise an dem Körper mit der Mulde angebracht ist. Das Verriegelungselement umfasst einen vorzugsweise Verriegelungsarm für ein Verriegeln der Klappe und einen im Vergleich dazu vorzugsweise kurzen Betätigungsarm, die um eine gemeinsame Achse verschwenkbar sind. Der Betätigungsarm ist also kürzer als der Verriegelungsarm. Das Stellglied vermag den Betätigungsarm für ein Verriegeln und/ oder ein Entriegeln zu verschwenken.

Weil das Verriegelungselement in der anspruchsgemäßen Weise als Hebel ausgestaltet ist, genügt ein kurzer Hub des Riegels des Stellglieds, um zu verriegeln oder zu entriegeln. Dies ermöglicht eine kompakte Bauweise einer Baugruppe, die den Muldenkörper mit einer daran mittelbar oder unmittelbar verschwenkbar befestigten Klappe zum Verschließen einer Mulde des Muldenkörpers umfasst sowie das Verriegelungselement und das Stellglied. Mit dem Verriegelungsarm kann die Klappe verriegelt werden. Ist die Klappe verriegelt worden, so kann diese nicht mehr geöffnet werden, ohne zuvor zu entriegeln. Der Betätigungsarm dient der Übertragung einer Drehbewegung auf den Verriegelungsarm für ein Verriegeln oder ein Entriegeln.

In einer Ausführungsform der Erfindung ist der Verriegelungsarm hakenförmig ausgestaltet. Das freie Ende des Verriegelungsarms umfasst also einen Haken, der dem Verriegeln der Klappe dient. Für ein Verriegeln wird der Haken derart zu einem Verriegelungselement der Klappe bewegt, dass dadurch verriegelt wird. Die Klappe kann beispielsweise einen Steg umfassen, der sich im verschlossenen Zustand der Mulde von der Grundfläche der Klappe in Richtung des Verriegelungsarms erstreckt. Wird die Mulde des Muldenkörpers mit der Klappe verschlossen, so kann der Haken des Verriegelungsarms so beispielsweise in eine Ausnehmung des Stegs eingreifen, dass die Klappe verriegelt wird. Der Steg kann für ein Verriegeln ebenfalls hakenförmig sein oder aber eine Ausnehmung umfassen, in die der Haken des Verriegelungsarms für ein Verriegeln hinein reichen kann. Eine Ausnehmung im Steg ist zu bevorzugen, da dann der Haken nicht seitlich abrutschen kann. Umgekehrt kann aber auch der Steg ein hakenförmiges Ende aufweisen, das in eine Ausnehmung im Verriegelungsarm für ein Verriegeln gelangt.

In einer Ausführungsform der Erfindung umfasst der Haken des Verriegelungsarms eine Einbuchtung, in die ein Vorsprung der Klappe bzw. ein Vorsprung am Steg der Klappe einzurasten vermag.

Vorzugsweise vermag der Verriegelungsarm einzurasten und so zu verriegeln. Das Einrasten kann gegen einen Dichtungsdruck einer Dichtung der Klappe erfolgen. Ist der Verriegelungsarm verrastet und die Klappe somit verriegelt, so wird der Verriegelungsarm formschlüssig gehalten.

In einer Ausführungsform der Erfindung ist der Verriegelungsarm federbelastet und zwar in Richtung seiner Verriegelungsstellung. Eine vorgespannte Feder wirkt dann also auf den Verriegelungsarm ein und drückt diesen in Richtung seiner Verriegelurigsstellung. Für ein Verriegeln ist bei dieser Ausführungsform keine Betätigung des Betätigungsarms durch das Stellglied erforderlich, wenn die Vorspannung der Feder hinreichend groß ist. Bevorzugt ist die Vorspannung der Feder daher derart groß, dass allein aufgrund dieser Vorspannung verriegelt werden kann.

Die Feder ist vorzugsweise eine Schenkelfeder, also eine gewundene Biegefeder mit wenigstens einem Schenkel, grundsätzlich jedoch mit zwei Schenkeln. Der gewundene Teil der Schenkelfeder verläuft vorzugsweise um die Achse herum, die der schwenkbaren Befestigung des Betätigungsarms sowie des Verriegelungsarms dient. Ein Schenkel der Schenkelfeder liegt mit seinem Ende an dem Verriegelungsarm vorgespannt so an, dass der Verriegelungsarm in Richtung seiner Verriegelungsstellung gedrückt wird. Ein anderer Schenkel der Schenkelfeder kann so abgestützt sein und zwar insbesondere am Körper mit der Mulde, dass hierdurch eine gewünschte Vorspannung der Schenkelfeder bereitgestellt wird, die den Verriegelungsarm in Richtung seiner Verriegelungsstellung drückt.

In einer Ausführungsform der Erfindung ist das Ende des Hakens des Verriegelungsarms rampenförmig gestaltet. Hierdurch wird es möglich, dass durch das Verschließen der Klappe der Verriegelungsarm ausgehend von seiner Verriegelungsposition bzw. seiner Verriegelungsstellung zunächst zurück gedrückt wird, um schließlich für ein Verriegeln durch die Federkraft in die Verriegelungsposition zurückbewegt zu werden. Alternativ oder ergänzend kann ein Stegende, das mit der Klappe insbesondere einteilig verbunden ist, rampenförmig gestaltet sein, um die vorgenannte Wirkung zu erzielen. Die Kappe mit dem Steg bestehen bevorzugt aus Kunststoff, da dies eine einteilige Herstellung ermöglicht und zu einem geringen Gewicht führt.

In einer Ausführungsform der Erfindung gibt es eine insbesondere aus Metall oder Kunststoff bestehende Stange, die einerseits mit dem freien Ende bzw. dem offenen Ende des Betätigungsarms verbunden ist und zwar insbesondere beweglich verbunden ist. Das andere Ende der Stange ist mit dem freien Ende des Riegels des Stellglieds verbunden und zwar insbesondere beweglich, so zum Beispiel drehbar verbunden. Durch das Vorsehen der Stange wird es möglich, das Stellglied in einer besonders geeigneten Weise an einer besonders geeigneten Stelle anzubringen, so zum Beispiel an einem Gehäuseteil, das von der Mulde absteht. Das Gehäuseteil kann einen Bereich umschließen, der die Klappe drehbar mit dem Körper mit der Mulde verbindet. Durch eine bewegliche Anbringung der Stange wird die Flexibilität der Unterbringungsmöglichkeiten des Stellglieds weiter erhöht.

In einer Ausführungsform der Erfindung umfasst das Verriegelungselement eine Achse, wobei am einen Ende der Achse der Verriegelungsarm und am anderen gegenüberliegenden Ende der Achse der Betätigungsarm angebracht ist. Auch diese Ausführungsform ermöglicht es, das Stellglied mit Abstand von dem Bereich anzuordnen, der der Verriegelung dient. Diese Ausführungsform ermöglicht es ebenfalls, eine besonders geeignete Anbringungsmöglichkeit des Stellglieds auszuwählen. Weist der Muldenkörper in Aufsicht gesehen eine Grundfläche auf, so ist das Stellglied bevorzugt beim Randbereich dieser Grundfläche angebracht. Vorzugsweise ist das Stellglied in einer entsprechenden Aufsicht gesehen oberhalb dieser Grundfläche angebracht. Insgesamt gelingt so eine kompakte Bauweise, die beispielsweise nicht sehr lang ausgestaltet ist, was für eine Handhabung und eine Montage günstig ist.

In einer Ausführungsform der Erfindung ist das Stellglied mithilfe einer Schraubverbindung, vorzugsweise mit einer Bajonettverbindung mit dem Körper mit der Mulde verbunden. Es genügt in diesem Fall eine Drehbewegung des Stellglieds gegenüber dem Körper mit der Mulde, um das Stellglied an dem Körper mit der Mulde anzubringen. Im Fall einer Bajonettverbindung kann eine Drehbewegung von nicht mehr als 45° genügen. Das Stellglied kann Flügel einer solchen Bajonettverbindung umfassen und der Körper mit der Mulde eine damit korrespondierende Ausnehmung in einer Wand, die dann Teil der Bajonettverbindung ist. Eine solche Wand ist vorzugsweise einteilig mit dem Körper mit der Mulde verbunden, um die Zahl der Teile zu minimieren. Die Montage der Baugruppe wird so vereinfacht. Der Riegel des Stellglieds führt insbesondere durch Flügel einer solchen Bajonettverbindung hindurch, um zu einer kompakten Bauweise zu gelangen. Es muss bei dieser Ausführungsform kein darüber hinaus gehender Bauraum für eine Befestigung des Stellglieds an dem Körper mit der Mulde bereitgestellt werden.

In einer Ausführungsform der Erfindung ist der Riegel des Stellglieds so beschaffen, dass dieser durch eine Drehbewegung, die für ein Verbinden des Stellglieds mit dem Körper mit der Mulde durchgeführt wird, mit dem Verriegelungselement und zwar insbesondere mit dem Betätigungsarm verbunden wird. Insbesondere in Kombination mit dieser Ausführungsform ist eine Bajonettverbindung für ein Anbringen des Stellglieds an dem Körper mit der Mulde von besonderem Vorteil. Eine Montage wird so weiter vereinfacht und beschleunigt. Diese technische Lösung stellt eine eigenständige Erfindung unabhängig von dem Gegenstand des Hauptanspruchs dar.

In einer Ausführungsform der Erfindung umfasst der Riegel des Stellglieds an seinem freien Ende einen seitlich abstehenden Bolzen, der beispielsweise senkrecht von dem Riegel absteht, also mit dem Riegel einen rechten Winkel einschließt. Diese Ausführungsform trägt dazu bei, dass der Riegel mit dem Betätigungsarm verbunden werden kann, indem das Stellglied durch eine Drehbewegung mit dem Körper mit der Mulde verbunden wird. Der Bolzen ist mit dem Riegel insbesondere einteilig verbunden, um die Zahl der Teile zu minimieren.

In einer Ausführungsform der Erfindung weist der Betätigungsarm an seinem freien Ende eine Ausnehmung auf, die dem Verbinden mit dem Riegel dient. Diese Ausführungsform trägt dazu bei, dass der Riegel mit dem Betätigungsarm verbunden werden kann, indem das Stellglied durch eine Drehbewegung mit dem Körper mit der Mulde verbunden wird.

In einer Ausführungsform der Erfindung ist die Ausnehmung so dimensioniert, dass ein Bewegen des Verriegelungsarms von seiner verriegelnden Stellung in seine nicht verriegelnde Stellung nicht zur Folge hat, dass zugleich der Riegel des Stellglieds bewegt werden muss. Es gibt also innerhalb der Ausnehmung einen geeignet groß dimensionierten Freigang für den Bolzen, der seitlich vom Riegel absteht. Wird die Klappe geschlossen und dadurch der Verriegelungsarm insbesondere gegen eine Federkraft aus seiner verriegelnden Stellung heraus bewegt, so wird bei dieser Ausführungsform dann der Riegel nicht zugleich ebenfalls bewegt. Dies minimiert den Kraftaufwand, der für ein Verschließen der Mulde durch die Klappe erforderlich ist. Eine herzförmige Ausnehmung ist zu Erzielung des gewünschten Freigangs besonders zweckmäßig.

In einer Ausführungsform der Erfindung umfasst das Stellglied keine Feder innerhalb des Gehäuses des Stellglieds, die den Riegel von einer Stellung in eine andere Stellung zu bewegen vermag. Dies trägt weiter dazu bei, dass das Stellglied und damit die Baugruppe besonders kompakt gebaut werden kann.

Der Körper mit der Mulde kann Rastelemente umfassen, um den Körper mit der Mulde durch Verrasten in ein Kraftfahrzeug besonders einfach und schnell einbauen zu können.

Die Mulde umfasst in einer Ausführungsform einen Tankstutzen, um das Kraftfahrzeug mit Kraftstoff versorgen zu können. Die Mulde ist in einer Ausführungsform alternativ oder ergänzend mit einer Ladeeinrichtung versehen, die insbesondere eine Ladebuchse und/ oder einen Ladestecker für ein Aufladen einer Batterie des Kraftfahrzeugs umfasst. Die Ladeeinrichtung kann mit einer Ladeeinrichtung einer Ladestation mechanisch und elektrisch verbunden werden, um die Batterie eines solchen Fahrzeugs aufzuladen. Es handelt sich dabei dann insbesondere um ein Fahrzeug mit einem elektrischen Antrieb.

Der Körper mit der Mulde besteht vorzugsweise aus Kunststoff. Das Verriegelungselement mit den beiden Verriegelungsarmen und einer Achse sind vorzugsweise einteilig ausgeführt und besteht ebenfalls vorzugsweise aus Kunststoff. Der Riegel des Stellglieds besteht vorzugsweise aus Kunststoff oder aber aus Metall. Durch Auswahl des Materials Kunststoff wird das Gewicht minimiert. Außerdem können relativ komplexe Geometrien einteilig ohne sehr großen technischen Aufwand hergestellt werden.

Nachfolgend wird die Erfindung anhand von Figuren nebst zugehöriger Beschreibung im Rahmen eines Ausführungsbeispiels näher erläutert.

Es zeigen
- Figur 1:: Verriegelungseinrichtung mit einem Körper mit einer Mulde und einem Stellglied
- Figur 2:: Ausschnitt der Verriegelungseinrichtung im entriegelten Zustand
- Figur 3:: Ausschnitt der Verriegelungseinrichtung während des Schließens einer Klappe
- Figur 4:: seitliche Ansicht eines Verriegelungsarms im verriegelten Zustand der Verriegelungseinrichtung.

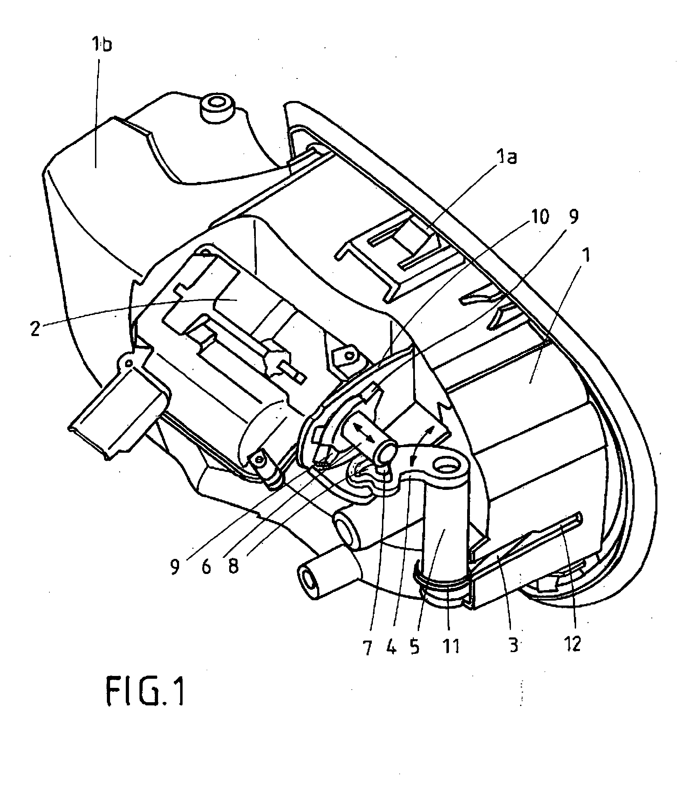

Die Figur 1 zeigt eine Verriegelungseinrichtung für eine Klappe. Die in der Figur 1 nicht sichtbare Klappe ist an einem Körper 1 mit einer Mulde verschwenkbar befestigt ist. An dem Mufdenkörper 1 ist ein Stellglied 2 angebracht. Die Verriegelungseinrichtung umfasst ein Verriegelungselement 3, 4, 5, mit dem die Klappe verriegelt werden kann. Das Verriegelungselement weist einen Verriegelungsarm 3 für ein Verriegeln der Klappe und einen im Vergleich dazu kurzen Betätigungsarm 4 auf, die an den beiden Enden einer gemeinsamen Achse 5 angebracht sind. Die Achse 5 ist verschwenkbar gelagert. Ein Riegel 6 des Stellglieds 2 ist mit dem kurzen Betätigungsarm 4 so verbunden, dass das Stellglied 2 den Betätigungsarm für ein Entriegeln zu verschwenken vermag.

Der Riegel 6 des Stellglieds 2 weist an seinem freien Ende einen seitlich abstehenden Bolzen 7 auf, der senkrecht von dem Riegel 6 absteht. Der Betätigungsarm 4 weist an seinem freien Ende eine herzförmige Ausnehmung 8 auf, in die der seitlich abstehende Bolzen 7 hinein reicht. Das freie Ende des Riegels 6 ist so mit dem freien Ende des Betätigungsarms 7 verbunden.

Die herzförmige Ausnehmung 8 umfasst einen Grund sowie ausgehend vom Grund eine erste Ausbuchtung, die benachbart zum Stellglied 2 angeordnet ist, sowie eine zweite Ausbuchtung, die im Vergleich zu der ersten Ausbuchtung weiter entfernt vom Stellglied 2 angeordnet ist. Die erste Ausbuchtung ist daher zwischen dem Stellglied 2 und der zweiten Ausbuchtung angeordnet.

Das Stellglied 2 umfasst Flügel 9 einer Bajonettverbindungseinrichtung, um das Stellglied mit einer Drehbewegung von beispielsweise 45° mit dem Körper 1 verbinden zu können. Der Muldenkörper 1 umfasst eine Wand 10, die Teil dieser Bajonettverbindung ist. Die Wand 10 umfasst eine Ausnehmung, die im Randbereich zwei Ausnehmungsverlängerungen umfasst, die zu den beiden Flügeln 9 korrespondieren. Die Flügel 9 werden durch diese Ausnehmungsverlängerungen hindurch geschoben. Anschließend wird der Stellantrieb 2 in die Stellung verdreht, die in der Figur 1 gezeigt wird. Dadurch wird nicht nur der Stellantrieb 2 mit dem Muldenkörper 1 verbunden, sondern zugleich auch der Riegel 6 mit dem Betätigungsarm 4. Es ist also kein separater Arbeitsschritt erforderlich, um den Riegel 6 mit dem Betätigungsarm 4 zu verbinden.

Die Achse 5 ist mit einer Schenkelfeder 11 versehen und führt durch den gewundenen Bereich der Schenkelfeder 11 hindurch. Mithilfe der Schenkelfeder 11 wird der Verriegelungsarm 3 durch eine Ausnehmung 12 des Körpers 1 hindurch und so in die Mulde hinein gedrückt und zwar in seine in der Figur 1 gezeigte verriegelnde Stellung.

Der in der Figur 1 gezeigt Körper 1 umfasst Rastelemente 1a, um die in der Figur 1 gezeigte Baugruppe durch Verrasten mit einem Kraftfahrzeug verbinden zu können. Ein Bereich 1b des Körpers 1 umhüllt die schwenkbare Anbringung der Klappe an den Körper 1. Die Klappe kann einen Arm umfassen, der an seinem entsprechenden Ende beispielsweise durch ein Scharnier mit dem Körper 1 verschwenkbar verbunden ist. Der Arm reicht dann in die Umhüllung 1 b hinein. Ein solcher Arm ist vorzugsweise einteilig mit der Klappe verbunden.

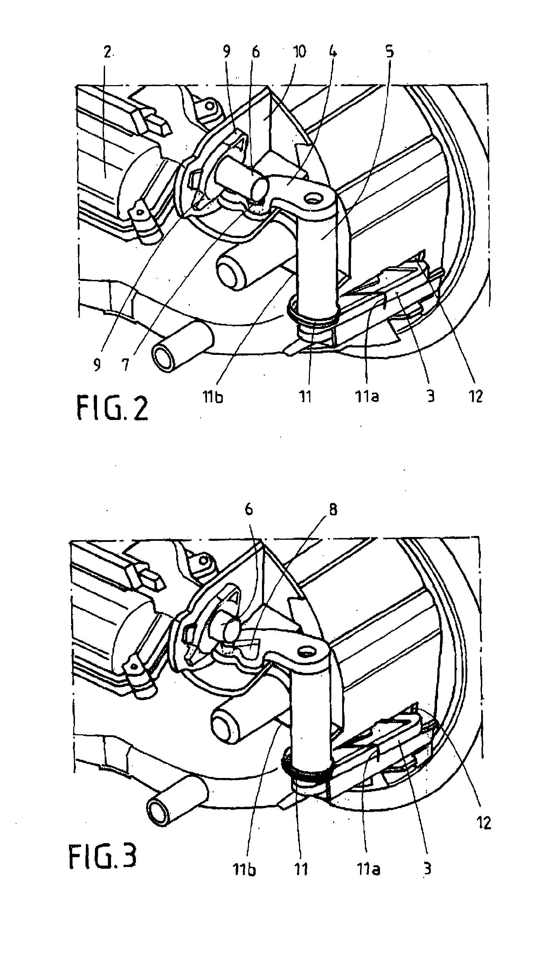

In der Figur 2 wird ein Ausschnitt aus der Figur 1 gezeigt und zwar während des Verschließens der Mulde mit der Klappe. Durch das Verschließen wird der Verriegelungshebel 3 zunächst aus seiner verriegelnden Stellung heraus gedrückt und so teilweise durch die Öffnung 12 hindurch. Diese Bewegung erfolgt gegen die Kraft der Feder 11 mit ihren Schenkeln 11a und 11b. Verantwortlich dafür sind ein rampenförmiges Ende des Verriegelungsarms 3 sowie ein rampenförmiges Ende eines Stegs der Klappe. Durch den Steg wird der Verriegelungsarm 3 aufgrund der rampenförmigen Enden aus seiner verriegelnden Stellung heraus gedrückt. Dadurch gelangt der seitlich abstehende Bolzen 7 in die gerundete zweite Ausbuchtung der herzförmigen Ausnehmung 8 wie in der Figur 2 gezeigt hinein. Mit dieser Bewegung ist keine Bewegung des Riegels 6 verbunden.

Wird die Mulde mit der Klappe schließlich vollständig verschlossen, so kann der Verriegelungsarm aufgrund der Feder 11 in seine verriegelnde Stellung zurückspringen und so den Deckel verriegeln. Wiederum ist mit dieser Bewegung kein Bewegen des Riegels 6 verbunden.

Soll eine verriegelte Klappe entriegelt werden, so wird der Bolzen 6 in Richtung des Gehäuses des Stellantriebs 2 bewegt. Der Riegel 6 erreicht schließlich so die Stellung, die in der Figur 3 gezeigt wird. Der seitlich abstehende Bolzen 7 gelangt dann in die andere gerundete erste Ausbuchtung der herzförmigen Ausnehmung 8 hinein. Der Verriegelungsarm 3 wird aus seiner verriegelnden Stellung durch die Öffnung 12 teilweise heraus bewegt und zwar gegen die Federkraft der Feder 11. Die Klappe ist nun entriegelt und kann geöffnet werden. Um ausgehend von der in der Figur 3 gezeigten Stellung den Riegel 6 wieder weiter aus dem Gehäuse des Stellglieds 2 heraus zu bewegen, ist kein elektrischer Antrieb erforderlich. Hierfür genügt die Federspannung, die durch die Feder 11 bereitgestellt wird. Im Anschluss an ein Öffnen der Klappe gelangt also der Riegel 6 alleine aufgrund der vorgespannten Feder 11 in seine Stellung zurück, die in den Figuren 1 und 2 gezeigt ist.

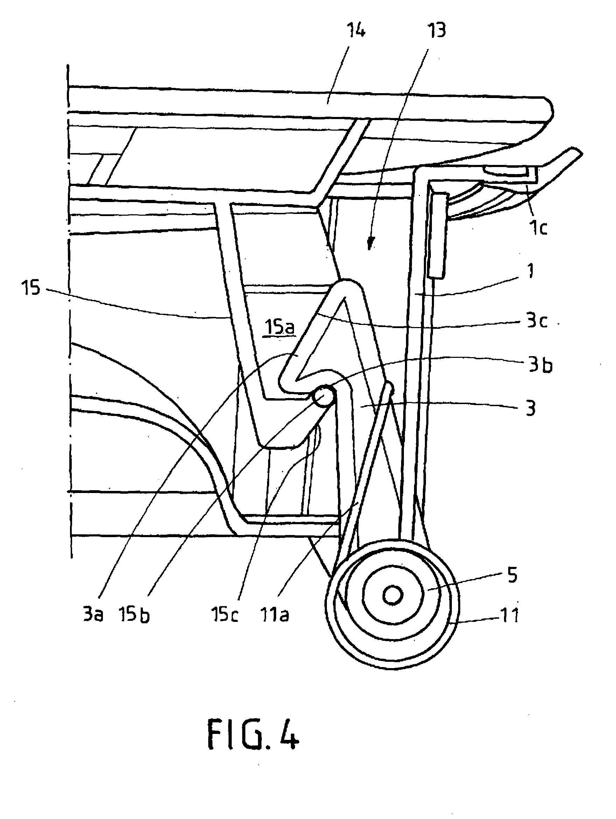

Die Figur 4 zeigt ausschnittsweise einen Schnitt durch den Körper 1, der eine Mulde 13 umfasst. Die Mulde 13 kann durch den Deckel bzw. die Klappe 14 verschlossen werden. Im verschlossenen Zustand wird die Klappe 14 wie in Figur 4 dargestellt verriegelt und zwar durch das hakenförmige Ende 3a des Verriegelungsarms 3. Von der Grundfläche des Deckels bzw. der Klappe 14 erstreckt sich ein Steg 15 in Richtung des Verriegelungsarms 3. Der Steg 15 ist mit der Klappe 14 einteilig verbunden. Für ein Verriegeln gelangt das hakenförmige Ende 3a in eine Ausnehmung 15a des Stegs 15 hinein. Der Haken 3a weist eine Mulde 3b auf, in die ein Vorsprung 15b des Stegs 15 einrastet, wenn die Klappe 14 verriegelt wird. Ein Dichtungsring, der eine dichte Verbindung zwischen der Klappe 14 und dem Rand 1 c des Körpers mit der Mulde 13 dicht verbinden zu vermag, wird in der Figur 4 nicht gezeigt. Der Dichtring kann mit dem Rand 1c des Körpers 1 fest verbunden sein oder aber mit dem entsprechenden Randbereich der Klappe 14. Ein solcher Dichtring aus elastischem Material kann eine federnde Bewegung der Klappe 14 für ein Verrasten der Verriegelung bewirken. Außerdem bewirkt ein solcher Dichtring, dass die Klappe 14 im Anschluss an ein Entriegeln durch die Federkraft des Dichtrings in Öffnungsrichtung bewegt wird. Der Dichtring trägt also dafür Sorge, dass die Klappe 14 in Öffnungsrichtung federbelastet ist. Um die Klappe in der gewünschten Weise durch eine Feder zu belasten, ist allerdings nicht ein Dichtring notwendig. Es kann also auch eine vorgespannte Feder vorgesehen sein, die beispielsweise im Bereich der schwenkbaren Verbindung angebracht ist und die die Klappe in Öffnungsrichtung drückt. Eine solche Feder kann aber auch in Ergänzung zum Dichtring vorgesehen sein.

Das offene Ende des Verriegelungsarms 3 sowie das offene Ende des Stegs 15 sind wie aus der Figur 4 ersichtlich derart rampenförmig gestaltet (Rampen 15c bzw. 3c), dass durch das Verschließen der Klappe 14 der Verriegelungsarm ausgehend von seiner in der Figur 4 gezeigten Verriegelungsposition bzw. seiner Verriegelungsstellung zunächst zurück gedrückt wird, um schließlich für ein Verriegeln in die Verriegelungsposition durch die Feder 11 zurückbewegt zu werden.

Ein Öffnen bzw. Schließen der Klappe findet also wie statt: ist die Klappe 14 verschlossen und verriegelt, so befindet sich der Bolzen 7 im Grund der herzförmigen Ausnehmung 8. Soll die Klappe 7 nun geöffnet werden, so bewegt sich der Riegel 6 aufgrund einer Kraft, die durch einen elektrischen Antrieb des Stellglieds auf den Riegel 6 ausgeübt wird, von der in der Figur 1 gezeigten Stellung in Richtung Stellglied 2 und gelangt schließlich so in die in der Figur 3 gezeigten Stellung. Der Bolzen 7 gelangt dadurch vom Grund der herzförmigen Ausnehmung 8 in die erste herzförmige Ausbuchtung hinein, die benachbart zum Stellglied 2 angeordnet ist. Hierdurch wird der Verriegelungsarm 3 aus der in den Figuren 1 und 4 gezeigten verriegelnden Stellung heraus bewegt. Die Klappe 14 wird dadurch entriegelt. Aufgrund der Federbelastung beispielsweise aufgrund des genannten Dichtrings springt die Klappe 14 nun zumindest ein Stück in Richtung geöffnete Stellung. Es genügt daher eine durch den Antrieb des Stellglieds impulsartig aufgewendete Kraft, um den Riegel 6 in seine in der Figur 3 gezeigte Stellung zu bewegen, da im Anschluss daran sich die Klappe 14 sofort sprungartig in Richtung Öffnungsstellung bewegt. Wird die Kraft durch den Antrieb des Stellglieds 2 nicht mehr bereit aufgewendet, so trägt die Vorspannung der Feder 11 dafür Sorge, dass der Riegel 6 zurück bewegt wird und zwar in die Stellung, die in der Figur 1 gezeigt wird. Der Bolzen 7 gelangt so wieder in den Grund der herzförmigen Ausnehmung 8 hinein.

Wird im Anschluss daran die Klappe 14 wieder geschlossen, so wird der Verriegelungsarm 3 aus seiner verriegelnden Stellung zunächst wieder durch den Steg 15 heraus gedrückt. Der Bolzen 7 gelangt dadurch vom Grund der herzförmigen Ausnehmung 8 in die zweite Ausbuchtung hinein, wie in der Figur 2 gezeigt wird und zwar ohne dadurch den Riegel 6 zu bewegen. Erreicht die Klappe 14 so die geschlossene Stellung, so springt der Verriegelungsarm 3 aufgrund seiner Federbelastung durch die Feder 11 in seine verriegelnde Stellung zurück. Der Bolzen 7 gelangt dadurch wieder in den Grund der herzförmigen Ausnehmung 8, wie in der Figur 1 gezeigt wird.

Eine herzförmige Ausnehmung 8 hat sich als besonders geeignet herausgestellt, um den geschilderten gewünschten Bewegungsablauf besonders störsicher durchführen zu können.

### Bezugszeichenliste:

- 1: Körper 1 mit einer Mulde
- 1a: Rastelement
- 1 b: Umhüllung
- 1c: oberer Randbereich des Körpers um Mulde herum
- 2: Stellglied
- 3: Verriegelungsarm
- 3a: hakenförmige Ende des Verriegelungsarms
- 3b: Mulde für eine Rastverbindung
- 3c: rampenförmiges Ende des Verriegelungsarms
- 4: Betätigungsarm 4
- 5: Achse
- 6: Riegel
- 7: seitlich abstehender Bolzen
- 8: Ausnehmung am freien Ende des Betätigungsarms
- 9: Flügel einer Bajonettverbindung
- 10: Wand mit Ausnehmung für Bajonettverbindung
- 11: Schenkelfeder
- 11a: am Verriegelungsarm anliegender Schenkel der Schenkelfeder
- 11b: am Körper mit der Mulde anliegender Schenkel der Schenkelfeder
- 12: Ausnehmung für den Verriegelungsarm in einer seitlich an die Mulde angrenzenden Wand
- 13: Mulde
- 14: Klappe
- 15: Steg
- 15a: Ausnehmung im Steg für die Aufnahme eines Hakens des Verriegelungsarms
- 15b: Vorsprung des Stegs für eine Rastverbindung
- 15 c: rampenförmiges Stegende

## Patentansprüche

1. Verriegelungseinrichtung für eine Klappe (14), wobei die Klappe (14) an einem Körper (1) mit einer Mulde (13) verschwenkbar befestigt ist, mit einem vorzugsweise an dem Körper (1) angebrachten Stellglied (2), mit einem Verriegelungselement (3, 4, 5) für ein Verriegeln der Klappe (14), **dadurch gekennzeichnet, dass** das Verriegelungselement (3, 4, 5) einen Verriegelungsarm (3) für ein Verriegeln der Klappe (14) und einen im Vergleich dazu kurzen Betätigungsarm (4) umfasst, die um eine gemeinsame Achse (5) verschwenkbar sind, und das Stellglied (2) den Betätigungsarm (4) für ein Verriegeln und/ oder ein Entriegeln zu verschwenken vermag.

2. Verriegelungseinrichtung nach dem vorhergehenden Anspruch, **dadurch gekennzeichnet, dass** das freie Ende des Verriegelungsarms (3) einen Haken (3a) umfasst, der dem Verriegeln der Klappe (14) dient.

3. Verriegelungseinrichtung nach einem der vorhergehenden Ansprüche, **dadurch gekennzeichnet, dass** ein Ende des Verriegelungsarms (3) für ein Verriegeln der Klappe (14) in ein mit der Klappe verbundenes Bauteil einzurasten vermag und zwar insbesondere in eine Ausnehmung (15a) eines Stegs (15), der sich von der Klappe (14) in Richtung Verriegelungsarm (13) erstreckt.

4. Verriegelungseinrichtung nach dem vorhergehenden Anspruch, **dadurch gekennzeichnet, dass** der Verriegelungsarm (3) für ein Verrasten eine Einbuchtung (3b) umfasst und der Steg (15) für ein Verrasten einen Vorsprung (15b).

5. Verriegelungseinrichtung nach einem der vorhergehenden Ansprüche, **gekennzeichnet durch** eine vorgespannte Feder (11), die den Verriegelungsarm (3) in Richtung seiner Verriegelungsstellung drückt.

6. Verriegelungseinrichtung für eine Klappe (14), wobei die Klappe (14) an einem Körper (1) mit einer Mulde (13) verschwenkbar befestigt ist, mit einem vorzugsweise an dem Körper (1) angebrachten Stellglied (2), mit einem Verriegelungselement (3, 4, 5) für ein Verriegeln der Klappe (14), insbesondere nach einem der vorhergehenden Ansprüche, **dadurch gekennzeichnet, dass** das Stellglied (2) durch eine Schraubverbindung, insbesondere durch eine Bajonettverbindung (9, 10) mit dem Körper (1) verbunden ist, wobei der Riegel (6) des Stellglieds (2) so mit dem Verriegelungselement (3, 4, 5) verbunden ist, dass diese Verbindung durch das Verbinden des Stellglieds (2) mit dem Körper (1) hergestellt werden kann.

7. Verriegelungseinrichtung nach einem der vorhergehenden Ansprüche, **dadurch gekennzeichnet, dass** der Riegel (6) des Stellglieds (6) einen seitlich abstehenden Bolzen (7) umfasst, der für ein Verbinden in eine Ausnehmung (8) des Verriegelungselements hineinreicht und zwar insbesondere in eine Ausnehmung (8) des Betätigungsarms (4) des Verriegelungselements, wobei das Verriegelungselement insbesondere einen Verriegelungsarm (3) für ein Verriegeln der Klappe umfasst, der durch Betätigen des Betätigungsarms verschwenkt werden kann.

8. Verriegelungseinrichtung für eine Klappe, wobei die Klappe an einem Körper (14) mit einer Mulde (13) verschwenkbar befestigt ist, mit einem vorzugsweise an dem Körper (1) angebrachten Stellglied (2), mit einem Verriegelungselement (3, 4, 5) für ein Verriegeln der Klappe (14) umfassen einen Betätigungsarm (4) und einen Verriegelungsarm (3) für ein Verriegeln der Klappe, mit einer Verbindung zwischen dem Stellglied (2) und dem Betätigungsarm für eine Betätigung des Betätigungsarms durch das Stellglied, insbesondere nach einem der vorhergehenden Ansprüche, **gekennzeichnet durch** einen Freigang innerhalb der Verbindung zwischen dem Stellglied (2) und dem Betätigungsarm (4), der so beschaffen ist, dass eine Bewegung des Verriegelungsarms (4) aus seiner verriegelnden Stellung nicht notwendiger Weise mit einer Bewegung des Riegels (6) des Stellglieds (2) einhergeht.

9. Verriegelungseinrichtung nach dem vorhergehenden Anspruch, **dadurch gekennzeichnet, dass** die Verbindung eine Ausnehmung und zwar insbesondere eine herzförmige Ausnehmung (8) umfasst sowie einen Bolzen (7), der in die Ausnehmung (8) hineinreicht.

10. Verriegelungseinrichtung nach dem vorhergehenden Anspruch, **dadurch gekennzeichnet, dass** der Bolzen (7) insbesondere senkrecht von einem Riegel (6) des Stellglieds absteht und/oder die Ausnehmung (8) am freien Ende des Betätigungsarms (4) angeordnet ist.

11. Verriegelungseinrichtung nach einem der beiden vorhergehenden Ansprüche, **dadurch gekennzeichnet, dass** der Bolzen (7) für ein Öffnen der Verriegelung der Klappe (14) in eine gerundete erste Ausbuchtung der herzförmigen Ausnehmung (8) gelangt, die benachbart zum Riegel (6) angeordnet ist, und/ oder durch ein Schließen der Klappe (14) in eine zweite Ausbuchtung der herzförmigen Ausnehmung (8) gelangt, die im Vergleich zu der ersten Ausbuchtung weiter entfernt vom Riegel (6) angeordnet ist, und/ oder die sich im verriegelten und/ oder geöffneten Zustand der Klappe (14) in dem Grund der herzförmigen Ausnehmung (8) befindet.

12. Verriegelungseinrichtung nach einem der vorhergehenden Ansprüche, **dadurch gekennzeichnet, dass** die Klappe im geschlossenen Zustand für ein Bewegen der Klappe in Öffnungsrichtung federbelastet ist und zwar insbesondere durch einen Dichtungsring, der die Verbindung zwischen Klappe (14) und einem Rand (1c) des Körpers (1) abzudichten vermag.

13. Verriegelungseinrichtung nach einem der vorhergehenden Ansprüche, **dadurch gekennzeichnet, dass** die Mulde (13) einen Tankstutzen und/ oder eine Ladeeinrichtung umfasst.

14. Verfahren für eine Montage einer Verriegelungseinrichtung nach einem der vorhergehenden Ansprüchen für eine Klappe (14), **dadurch gekennzeichnet, dass** ein Stellglied (2) durch eine Drehbewegung mit einem Körper (1) verbunden wird, wobei der Körper (1) eine Mulde (13) umfasst, die mit der an dem Körper (1) verschwenkbar befestigten Klappe (14) verschlossen werden kann, wobei durch die Drehbewegung ein Riegel (6) des Stellglieds (2) mit einem Verriegelungselement (3, 4, 5) verbunden wird, wobei das Verriegelungselement die Klappe (14) zu verriegeln vermag.

## Claims

1. Locking device for a flap (14), in which the flap (14) is pivotably fastened to a body (1) having a recess (3) with an actuator (2) preferably attached to the body (1) with a locking element (3, 4, 5) for locking the flap (14), **characterised in that** the locking element (3, 4, 5) contains a locking arm (3) for locking the flap (14) and a comparatively shorter actuating arm (4), which can be pivoted around a common axis and the actuator (2) being able to pivot the actuating arm (4) for locking and/or unlocking.

2. Locking device according to the preceding claim, **characterised in that** the free end of the locking arms (31) contains a hook (30) for locking the flap (14).

3. Locking device according to one of the preceding claims, **characterised in that** the end of the locking arm (3) can engage in a component connected to the flap for locking the flap (14) and, in particular in a recess (15a) of a bolt (15), extending from the flap (14) in the direction of the locking arm (13).

4. Locking device according to one of the preceding claims, **characterised in that** the locking arm (3) contains a recess (3b) for latching and the bar (15) a projection (15b) for latching.

5. Locking device according to one of the preceding claims, **characterised by** a pretensioned spring (11) pushing the locking arm (3) in the direction of its locked position.

6. Locking device for a flap (14), in which the flap (14) is pivotably attached to a body (1) with a recess (13) with an actuator (2) preferably attached to the body (1), a locking element (3, 4, 5) for locking the flap (14), in particular according to one of the preceding claims, **characterised in that** the actuator (2) is connected to the body (1) by means of a screw connection and, in particular, a bayonet connection (9, 10), in which the locking bar (6) of the actuator (2) is connected to the locking element (3, 4, 5) in such a way that this connection can be created by connecting the actuator (2) to the body (1).

7. Locking device according to one of the preceding claims, **characterised in that** the locking bar (6) of the actuator (2) contains a laterally protruding bolt (7) extending, in order to form a connection, into a recess (8) of the locking element and, in particular, into a recess (8) of the actuating arm (4) of the locking element, with the locking element in particular containing a locking arm (3) for locking the flap which can be pivoted by actuating the actuation arm.

8. Locking device for a flap, in which the flap is pivotably connected to a body (14) with a recess (13) with an actuator (2) preferably attached to body (1), a locking element (3, 4, 5) for locking the flap (14) comprising an actuating arm (4) and a locking arm (3) for locking the flap, with a connection between the actuator (2) and the actuating arm for actuation of the actuating arm by the actuator, in particular according to one of the preceding claims, **characterised by** a free movement within the connection between the actuator (2) and the actuating arm (4) and which is designed in such a way that a movement of the locking arm (4) from its locked position is not necessarily associated with a movement of the locking bar (6) of the actuator (2).

9. Locking device according to one of the preceding claims, **characterised in that** the connection contains a recess and, in particular, a heart-shaped recess (8) as well as a bolt (7), extending into the recess (8).

10. Locking device according to the preceding claim, **characterised in that** the bolt (7) projects, in particular, vertically from a locking bar (6) and/or that the recess [8) is arranged at the free end of the actuating arm (4).

11. Locking device according to one of the preceding claims, **characterised in that** for opening the locking device of the flap (14), the bolt (7) enters a rounded first indentation of the heart-shaped recess (8) located adjacent to the locking bar (6) and/or which enters a second indentation of the heart-shaped recess by closing of the flap (14), which compared to the first indentation is located further away from the locking bar (6) and/or which in the locked and/or open state of the flap (14) is located in the base of the heart-shaped recess (8).

12. Locking device according to one of the preceding claims, **characterised in that** the flap in its closed state is spring loaded in order to move the flap in the opening direction and, in particular, by a sealing ring, sealing the connection between flap (14) and an edge (1c) of the body (1).

13. Locking device according to one of the preceding claims, **characterised in that** the recess (13) contains a filler neck and/or a charging means.

14. Method for assembling a locking device for a flap (14), **characterised in that** an actuator (2) is connected to a body (1) by a rotary movement, with the body (1) containing a recess (13) that can be closed by the flap (14) pivotably attached to the body (1) and in which a locking bar (6) of the actuator (2) is connected to a locking element (3, 4, 5) by a rotary movement and in which the locking element can lock the flap (1).

## Revendications

1. Dispositif de verrouillage d'une trappe (14), dans lequel la trappe (14) est fixée de manière pivotante à un corps (1) comprenant un creux (13), comprenant un actionneur (2) qui est de préférence monté sur le corps (1), et comprenant un élément de verrouillage (3, 4, 5) destiné à verrouiller la trappe (14), **caractérisé en ce que** l'élément de verrouillage (3, 4, 5) comprend un bras de verrouillage (3) pour verrouiller la trappe (14) et un bras d'actionnement (4) plus court par rapport au bras de verrouillage, les deux bras étant susceptibles d'être pivotés autour d'un axe commun (5), et que l'actionneur (2) peut pivoter le bras d'actionnement (4) pour un verrouillage et/ou un déverrouillage.

2. Dispositif de verrouillage selon la revendication précédente, **caractérisé en ce que** l'extrémité libre du bras de verrouillage (3) comprend un crochet (3a) qui sert à verrouiller la trappe (14).

3. Dispositif de verrouillage selon l'une des revendications précédentes, **caractérisé en ce qu'**une extrémité du bras de verrouillage (3) peut, pour verrouiller la trappe (14), s'encliqueter dans un élément de construction relié à la trappe et notamment dans un évidement (15a) d'une âme (15) qui s'étend à partir de la trappe (14) dans la direction du bras de verrouillage (3).

4. Dispositif de verrouillage selon la revendication précédente, **caractérisé en ce que** le bras de verrouillage comprend une dentelure (3b) pour l'encliquetage et l'âme (15) comprend une saillie (15b) pour l'encliquetage.

5. Dispositif de verrouillage selon l'une des revendications précédentes, **caractérisé par** un ressort (11) précontraint qui pousse le bras de verrouillage (3) dans la direction de sa position de verrouillage.

6. Dispositif de verrouillage d'une trappe (14), dans lequel la trappe (14) est fixée de manière pivotante à un corps (1) comprenant un creux (13), comprenant un actionneur (2) qui est de préférence monté sur le corps (1), et comprenant un élément de verrouillage (3, 4, 5) destiné à verrouiller la trappe (14), notamment selon l'une des revendications précédentes, **caractérisé en ce que** l'actionneur (2) est relié au corps (1) par moyen d'un raccord fileté, notamment par moyen d'un raccord à baïonnette (9, 10), le verrou (6) de l'actionneur (2) étant relié à l'élément de verrouillage (3, 4, 5) de sorte que cette liaison peut être établie en reliant l'actionneur (2) au corps (1).

7. Dispositif de verrouillage selon l'une des revendications précédentes, **caractérisé en ce que** le verrou (6) de l'actionneur (2) comprend un boulon (7) faisant latéralement saillie, qui, pour établir la liaison, pénètre dans un évidement (8) de l'élément de verrouillage, notamment dans un évidement (8) du bras d'actionnement (4) de l'élément de verrouillage, l'élément de verrouillage comprenant notamment un bras de verrouillage (3) destiné à verrouiller la trappe, lequel peut être pivoté en actionnant le bras d'actionnement.

8. Dispositif de verrouillage d'une trappe, dans lequel la trappe est fixée de manière pivotante à un corps (1) comprenant un creux (13), comprenant un actionneur (2) qui est de préférence monté sur le corps (1), et comprenant un élément de verrouillage (3, 4, 5) destiné à verrouiller la trappe (14), comprenant un bras d'actionnement (4) et un bras de verrouillage (3) destiné à verrouiller la trappe, comprenant une liaison entre l'actionneur (2) et le bras d'actionnement pour actionner le bras d'actionnement par moyen de l'actionneur, notamment selon l'une des revendications précédentes, **caractérisé par** un jeu à l'intérieur de la liaison ente l'actionneur (2) et le bras d'actionnement (4) qui est conçu de façon qu'un déplacement du bras de verrouillage (4) à partir de sa position verrouillée ne soit pas nécessairement accompagné d'un déplacement du verrou (6) de l'actionneur (2).

9. Dispositif de verrouillage selon la revendication précédente, **caractérisé en ce que** la liaison comprend un évidement et notamment un évidement en forme de coeur (8) ainsi qu'un boulon (7) qui pénètre dans l'évidement (8).

10. Dispositif de verrouillage selon la revendication précédente, **caractérisé en ce que** le boulon (7) fait notamment saillie perpendiculairement à partir d'un verrou (6) de l'actionneur et/ou l'évidement (8) est disposé à l'extrémité libre du bras d'actionnement (4).

11. Dispositif de verrouillage selon l'une des deux revendications précédentes, **caractérisé en ce que** pour ouvrir le verrouillage de la trappe (14), le boulon (7) se place dans un premier renflement arrondi de l'évidement sous forme de coeur (8), lequel est adjacent au verrou (6), et/ou pour fermer la trappe (14) il se place dans un deuxième renflement de l'évidement en forme de coeur (8) qui est disposé plus loin du verrou (6) par rapport au premier renflement, et/ou qui se trouve dans le fond de l'évidement en forme de coeur (8) dans l'état verrouillé et/ou ouvert de la trappe (14).

12. Dispositif de verrouillage selon l'une des revendications précédentes, **caractérisé en ce que** dans l'état fermé la trappe est sous la contrainte d'un ressort pour déplacer la trappe dans la direction d'ouverture, notamment par moyen d'une bague d'étanchéité qui peut étancher la liaison entre la trappe (14) et un bord (1 c) du corps (1).

13. Dispositif de verrouillage selon l'une des revendications précédentes, **caractérisé en ce que** le creux (13) comprend une tubulure de réservoir et/ou un dispositif de chargement.

14. Procédé de montage d'un dispositif de verrouillage selon l'une des revendications précédentes destiné à une trappe (14), **caractérisé en ce qu'**un actionneur (2) est relié à un corps (1) par un mouvement rotatif, le corps (1) comprenant un creux (13) qui est susceptible d'être fermé par la trappe (14) fixée de manière pivotante au corps (1), un verrou (6) de l'actionneur (2) étant relié à un élément de verrouillage (3, 4, 5) par le mouvement rotatif, l'élément de verrouillage pouvant verrouiller la trappe (14).
